# EUROPEAN PATENT SPECIFICATION

(11) **EP 0 522 994 B1**
(45) Date of publication and mention of the grant of the patent: **16.07.1997**
(21) Application number: 92600001.9
(22) Date of filing: 02.03.1992
(51) Int. Cl.: F03D 3/04

(54) **Wind turbine cross wind machine**
Windturbine mit senkrechter Welle
Eolienne à axe vertical

(30) Priority: 30.05.1991 WO PCT/GR91/00007
(43) Date of publication of application: 13.01.1993
(73) Proprietor: Valsamides, Michael, GR-18533 Piraeus (GR)
(72) Inventor: Valsamides, Michael, GR-18533 Piraeus (GR)

(56) References cited:
- WO-A-81/00436
- CH-A- 564 687
- FR-A- 454 016
- FR-A- 550 046
- FR-A- 576 980
- FR-A- 2 425 561
- FR-A- 2 476 761
- GB-A- 667 587
- US-A- 047 834
- US-A- 4 115 027
- US-A- 4 162 410

## Description

### THE BACKGROUND OF THE INVENTION

### THE FIELD OF THE ART

The present invention pertains to the field of the art of wind machines in general and in particular to the field of the wind turbine machines classified as either cross wind or vertical axis machines.

### THE PRIOR ART

Cross wind or vertical axis wind machines were known since the Babylonian times some 2800 years ago. They are generally known to offer certain advantages over the horizontal axis type because of their inherent ability to exploit directly the incoming wind independent of the direction from which it is blowing without any need for orientation mechanisms which are indespensable for the horizontal axis turbines.

Another advantage exhibited by vertical axis wind machines is their ability to deliver the power produced on their axle at ground level, whereas the horizontal axis machines need complicated transmission mechanisms or mounting of an electrogenerator onto the windmill. All these render the vertical axis turbines simpler to manufacture, install and operate.

Moreover, due to their geometric characteristics they offer the highest possible coefficient of power/to occupied ground factor, since their swept area in proportion to the occupied ground surface is by comparison larger.

Despite of their general superiority in comparison to horizontal axis wind machines, the vertical axis wind machines of the prior art present also certain drawbacks such as the relatively lower efficiency of the Savonius rotor and the additional inability of the Darrieus rotor machine to start by itself, the basic reason being they operate unprotected in an open stream, the wind striking on both sides of the rotor.

Many efforts were made to remedy these drawbacks the most prominent being shown by referenced documents presenting shrouded vertical axis wind turbines (FR-A-2425561, in accordance with the preamble of claim 1, and US-A-4162410, in accordance with the preamble of claim 8) but even these could not achieve significant results as the state of the art is aware, both types presenting low aerodynamic transparency, that is high drag resistance to the stream. The second one, by own admission, does not present even self starting capability.

The high drag of the shrouded turbines is demonstrated by a back pressure build-up in the area around the upstream side of the engines, which restrains the stream flow from passing through the engine and produce power, and instead diverts the stream to bypass the engine in the form of side flows around the engine. Therefore aerodynamic transparency is expressed by the ratio between the flow passing through the engine compared to the bypass flows around it. Considering additionaly that the theoretical limit of the power that can be extracted from the stream flow cannot surpass 59,2% (Betz limit) it becomes evident the reason of the low efficiency of the existing aeolic machines.

It is therefore the main object of the present invention to overcome the above drawbacks of the vertical axis wind machines and provide a vertical axis machine, of high aerodynamic transparency, which will be capable of eliminating the counter acting impulse exerted by the wind stream on a certain portion of the rotor blades, whilst presenting omnidirectional capability for maximum exploitation of the stream power without the use of orientation mechanism and with self starting capability.

The invention is therefore embodied as disclosed in claims 1 and 8.

The above main objects of the invention are accomplished by means of a shrouded turbine, which comprises an arrangement of stator guide vanes, circumferentially disposed around a centrally located rotor. By progressively introducing structuraly new different component parts in this domain of technology characterized for high aerodynamic lift components, in limited numbers, of predetermined limits for relative dispositions and dimensions within the engine, all these guided by a different conceptual approach to this subject, a turbine machine of high aerodynamic transparency is achieved especially in the last versions were a combination of Bernoulli / Venturi effects are employed and the engine acting as an aerodynamic lens can reach a state of function where Betz limit is not valid or not valid in the known sense, and extraordinary results may be achieved.

Besides the above, we may add the inherent advantages of this engine owed to its geometric features, which are the highest safety working factor, excellent environmental compatibility with absence of noise and general disturbance in the neighbourhood as there are no external moving parts, also the highest ground exploitation factor matched with their compactness and the capability they possess to be built for longer unobstracted life and in much bigger sizes than the existing ones since the mechanical stresses involved are more evenly distributed within their structure saving thus quite a deal of available ground space, which means that with fewer engines we may produce significant amounts of power in remote places without disturbing the public. Thus an invention valuable to Society is hereby presented. All these data are explained and will become apparent from the following description, drawings and abstract.

### BRIEF DESCRIPTION OF THE DRAWINGS

The invention will become apparent to those skilled in the art by reference to the accompanying drawings, illustrating preferred embodiments of the invention.

Fig.1 shows a frontal view of a longitudinal section for an illustrative wind turbine cross wind machine, taken along its central axis of rotation I-I showing one configuration of supporting means between the stator and the rotor, and also an arrangement of a control mechanism for adjusting the declination angle of the guide vanes.

Fig.1a shows a perspective view of a control mechanism used to vary the declination angle of the guide vanes mounted underneath the base plate 5 which is shown partially cut away to reveal the control mechanism. Fig.1b shows a frontal view of a longitudinal section for an alternative wind turbine machine, taken along its central axis of rotation, the rotor top 6 and bottom 7 cover discs being contained flush into corresponding recesses of the upper (18) and base (19) support plates of the machine.

Fig. 1c shows a frontal view of a longitudinal section for an alternative wind turbine machine taken along the central axis of rotation, with arcuale internal upper and lower surfaces, symmetrically converging inwardds at the machine centre, whereby a vertical concentration of the wind stream is achieved causing an increase of its velocity in application of the Bernoulli theorem.

Fig. 2. is a planar cross sectional view of the wind turbine machine of Fig 1, taken along line II-II showing declination angle and the first longitudinal plane (III-III).

Fig.3 shows a frontal blow-up view of the various constituent parts of an alternative wind turbine machine, with the guide vanes longitudinally extending to a downward divergent conoidal shape.

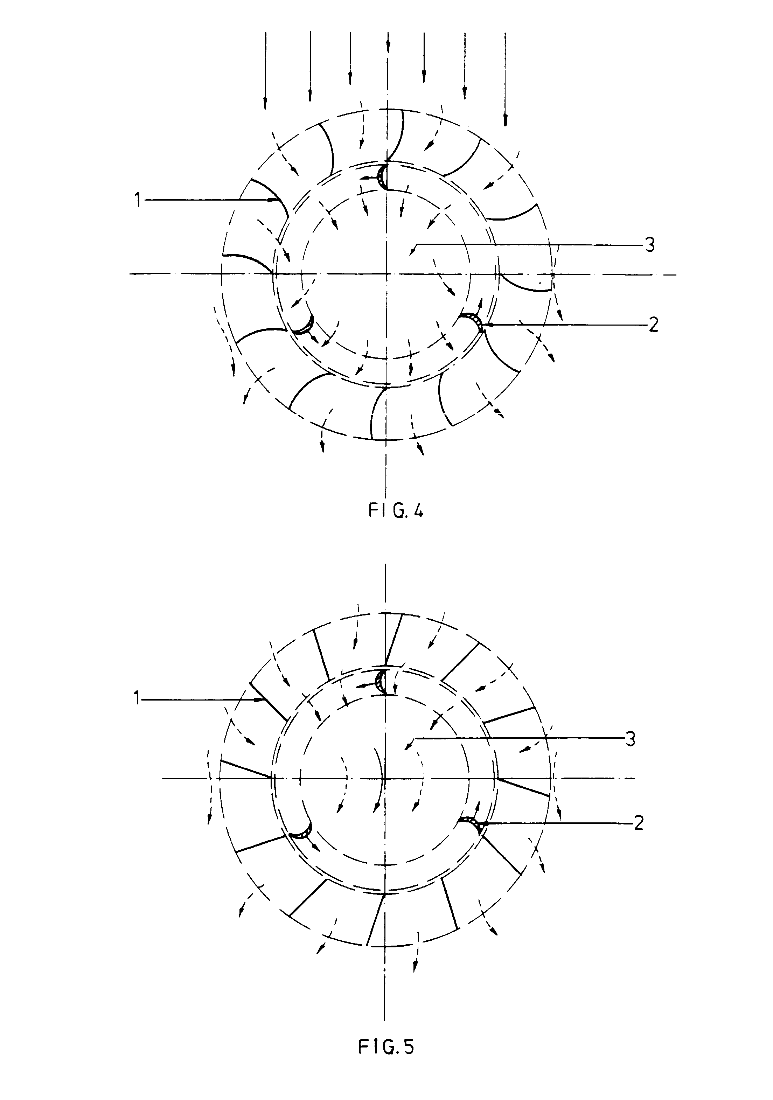

Fig.4 shows a planar cross sectional view of an alternative wind turbine, the guide vanes being shown with a curved cross section and also the rotor blades with an aerodynamical crescent shaped profile suitable for higher wind and rotor speeds.

Figure 5 shows a planar cross sectional view of an alternative wind turbine, the guide vanes being of flat configuration and straight profile, their angle of declination being variable.

Figure 6 shows a planar cross sectional view of a preferred embodiment of the proposed wind turbine machine, the guide vanes being of a "wing type" air foil profile flat on one side, and convex on the opposite side, with a variable angle of declination. Also the rotor blades are shown to be of the aerodynamicaly advantageous crescent shape.

Fig.6a shows a version of the above 'wing' type guide vanes of Fig.6, with partially concave front surface.

Fig.6b shows a version of the 'wing' type guide vanes of Fig.6, being provided with articulated inner edge in the form of a tail fin to guide further the airflow.

Fig.6c shows a planar cross sectional view of an alternative wind turbine machine with guide vanes of a modified crescent shape with flat surfaces at the tips of the front faces, having the possibility to vary their angle of declination. The rotor blades shown are also of the same modified crescent type as the guide vanes.

Figure 7 shows a planar cross sectional view of an alternative preferred embodiment of the proposed wind turbine machine, both the guide vanes and the rotor blades being of symmetrical airfoil type with variable angle of declination and angle of incidence respectively. Chord line a-a' and cross line b-b' for the airfoil profile are Illustratively defined in one of the depicted guide vanes.

Figure 7a shows a planar cross sectional view of an improved version of the wind turbine machine of Fig.7, with air passages 20 & 20' connecting the high pressure areas on the outer surface of the front part of the guide vanes and rotor blades with the low pressure developed during operation on the outer surfaces or their rear part. Distance -c- is also shown being the chord length between the cross line and the front edge of a blade or vane.

Figure 7b is a detailed planar cross sectional view of a single guide vane or rotor blade of Fig. 7a with a pair of single ducted air passages, these air passages crossing each other at a common junction point along their length.

Figure 7c is a detailed planar cross sectional view of a single guide vane or rotor blade of Fig. 7a with a pair of twin ducted air passages crossing each other on different levels.

Figure 7d shows a perspective view for air passages in a guide vane or rotor blade element crossing each other on different levels with vertically funneling air duct intakes.

The solid arrows indicate direction of motion for solid parts of the machine. The dotted arrows indicate airflows.

### DESCRIPTION OF THE PREFERRED EMBODIMENTS

The proposed invention consists to a cylindrical turbine machine for generating power by the rotation of a generally cylindrical rotor about its axis by a fluid stream moving in a cross direction relative to the rotor axis, the rotor being mounted for rotation inside a generally cylindrical stator.

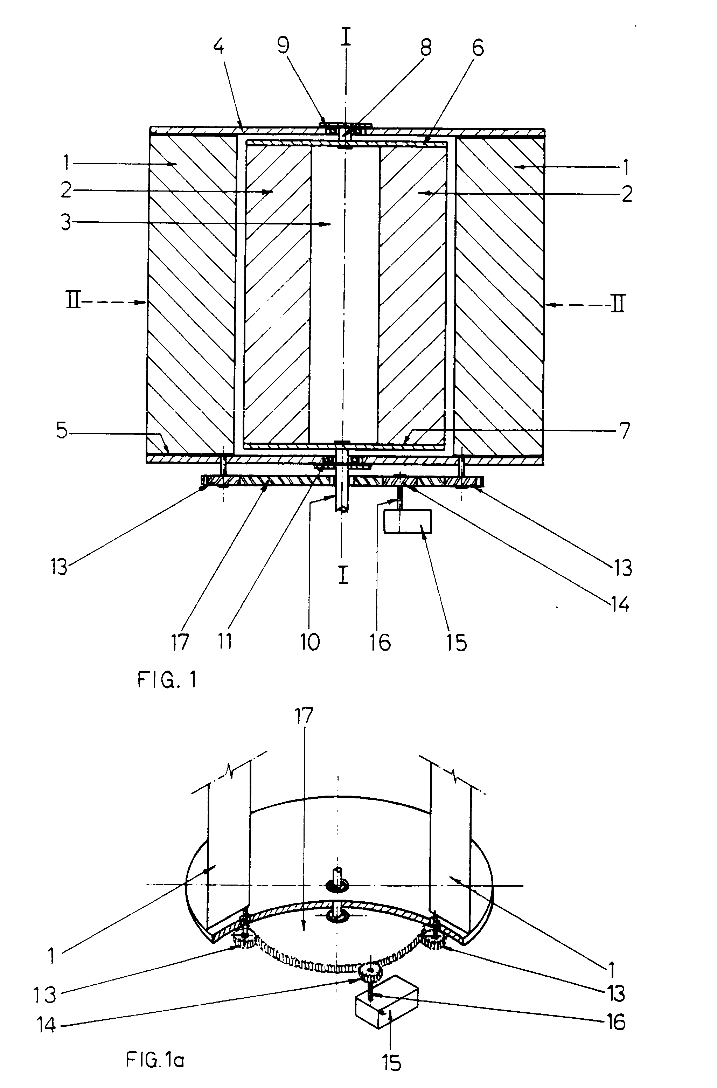

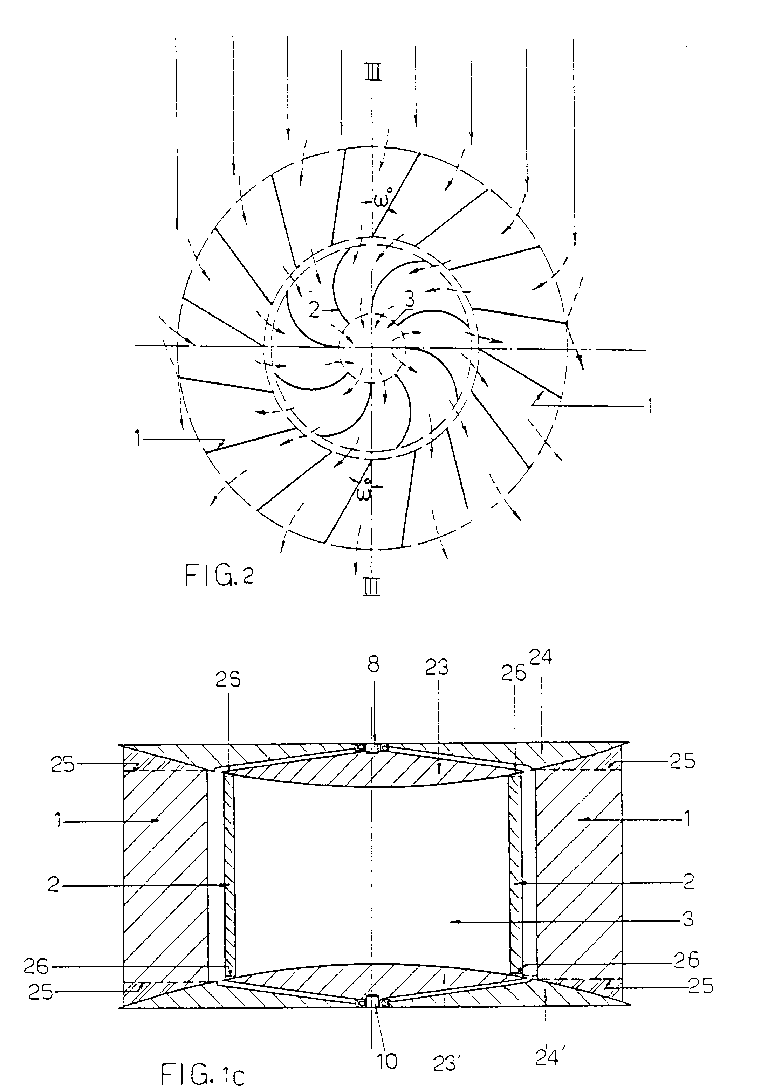

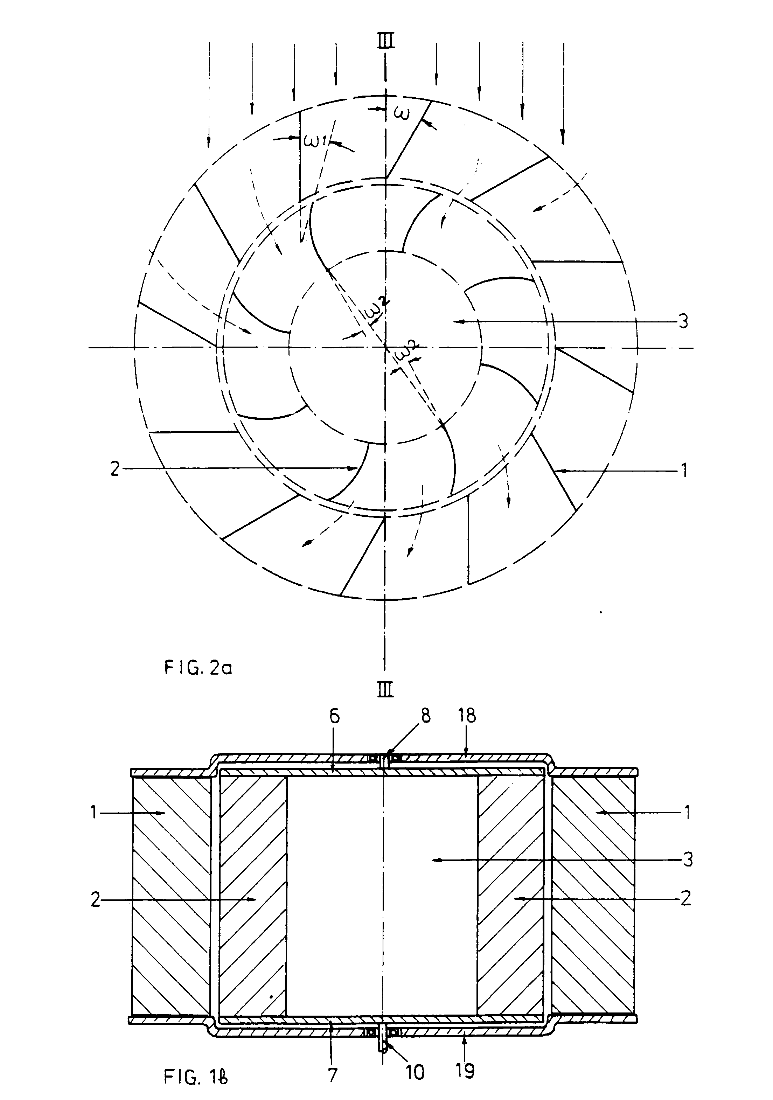

The rotor is of a generally cylindrical shape formed by a plurality of elongate rotor blades (2), but preferably not exceeding eight, equally and symmetrically spaced in a circumferential arrangementon the rotor periphery around a central circular opening or void space (3), with their lengths extending parallel to the rotor axis (I-I' Fig.1). The ends of the rotor blade lengths are characterized as upper or lower ends lying towards the upper or lower end of the cylindrical rotor respectively, or otherwise termed head and base of the rotor if the machine is not used in a vertical position. Therefore the two ends of each rotor blade are aligned to each other in an orientation parallel to the rotor axis. Each upper or lower end of the rotor blades is supported in place by the respective upper and lower rotor supporting means, mounted either fixedly or pivotally with freedom to turn along their length on pivots.

The stator is of a generally cylindrical shape and comprises a circumferential arrangement of a plurality of elongate guide vanes (1), preferably not exceeding fourteen, which define an external cylinder enclosing the above mentioned arrangement of rotor blades (2).

These guide vanes therefore lie with their lengths extending parallel to the rotor axis and to the rotor blade lengths as well. They are characterized in similar way as the rotor blades by upper or lower ends, those ends being aligned to each other in an orientation parallel to the rotor axis. Each guide vane upper and lower end is supported in place by the respective upper and lower stator supporting means, either fixedly attached or otherwise mounted on pivots 13 in Fig. 1 and 1a, so as to be able to turn pivotally along their length. The stator supporting means are placed parallel and externally from the rotor supporting means.

The rotor support means are centrally and rotatably mounted onto the respective stator supporting means. Therefore the stator is in surrounding relationship to the rotor with a small all around clearance, except for the supporting mountings, so that the rotor is centrally supported within the stator cylindrical spqce, free to rotate, with its axis parallel and in coincidance to the stator axis, that is the axis of the machine (I-I' Fig.1).

The overall machine diameter is the diameter of the outer circumference enclosing the guide vanes which is also the stator diameter.

All relative dimensions of the machine are based on this diameter.

Thus the working surface area of the proposed wind turbine machine is defined by the product of the overall diameter and the height of the above mentioned external cylinder. This is also termed as the wind capturing area of the machine.

The diameter of the rotor internal void space is not less than one sixth of the overall machine diameter.

In accordance to a first illustrative embodiment of the inven tion shown in longitudinal cross section in Fig.1, the stator and rotor supporting means are shown in an initial and simplified arrangement. According to this the stator supporting means comprise a circular head plate 4 and a similar base plate 5, where the guide vanes are mounted on pivots connected with gears 13 so they can be pivoted for adjustment. Bearings are provided at the centre 9 and 11 of the head plate 4 and base plate 5 respectively, within which rotates freely the rotor shaft in the form of twin stub shafts 8 and 10 respectively.

In the depicted embodiment the rotor supporting means are shown comprising a top circular disc cover 6 and a bottom equally circular disc cover 7, wherefrom extends the rotor shaft in the form of small cylindrical protrusions or stub shafts 8 and 10, whereby the rotor assembly is rotatably mounted within top and bottom bearings provided at central openings 9 and 11 of the head 4 and base 5 plates respectively referred to in the above stator supporting means. Thus the rotor shaft and consequently the rotor central imaginary axis of rotation (I-I' Fig. 1) passes through the centre of the above mentioned central opening 3. The power produced by the proposed wind machine may be then delivered by a bottom extension of the rotor stab-shaft 10; if case arises to facilitate installation and maintenance of the necessary power transmission equipment.

In the above depicted illustrative embodiments of the invention, both stator head and base plates as well as the top and bottom rotor discs, are flat, plain and compact without any openings therein; although alternatively they might comprise the compact region necessary for mounting the rotor stub shafts, or merely be perforated in their middle area so as to allow air passage from the spaces above and below the engine directly into the central rotor area if needed to equalize the low internal pressure of the engine with the ambient atmospheric one.

Furthermore, as shown in Fig.1b, the wind turbine machine may alternatively comprise the head plate 18 and base plate 19, each plate being provided with a circular centrally positioned recess of an adequate diameter and depth so as to acommodate flush in its inner side the rotor top or bottom discs respectively. This arrangement would offer a smoother and more free air passage through the engine as it reduces the obstacles and the associated drag and turbulence caused by them.

An alternative configuration of engine plates and rotor discs is shown in Fig.1c, where head 24 and base 24' plates are flat on their external sides supporting in their centre the rotor stub shafts 8 and 10 respectively. The inner surfaces of both pairs of plates and discs form a slightly curved profile, symmetrically converging verticalwise towards the centre of the machine, this curvature defining a continuous and uninterupted arc, except for the small gap between discs and plates, and whose edges meet the external plate sides. Each head and base plate bears in its inner curved surface a slightly conical circular recess, centrally disposed among the surrounding guide vanes 1, of an adequate diameter and depth to accomodate flush the rotor top 23 and bottom 23' discs respectively. This arrangement maximizes the air intake of the machine presenting a vertical application of the Bernouli effect in addition to the similar effect produced by the guide vanes. Also, this arrangement allows the electrical generator to be incorporated inside the stator and rotor supporting means. Lines 25 and 26 on the stator and rotor blade elements respectively denote that part of the blade lying between them which is articulated and can vary in angle of declination or incidence respectively.

Shown in Fig.1a is a perspective view of an illustrative a regulating mechanism used In adjusting at a desirable value the angle of declination (ω) of the guide vanes. A side view of the mechanism also appears in Fig.1. Each guide vane bears a small gear 13 meshing with a central toothed twheel 17, pivotally mounted onto the guide vanes base plate 5, by means of which the guide vanes may be rotated to perform airflow regulating function, a driving gear 14 also shown connected to a conventional electric actuator and electronic regulator device 15 by means of which movement of the guide vanes is initiated.

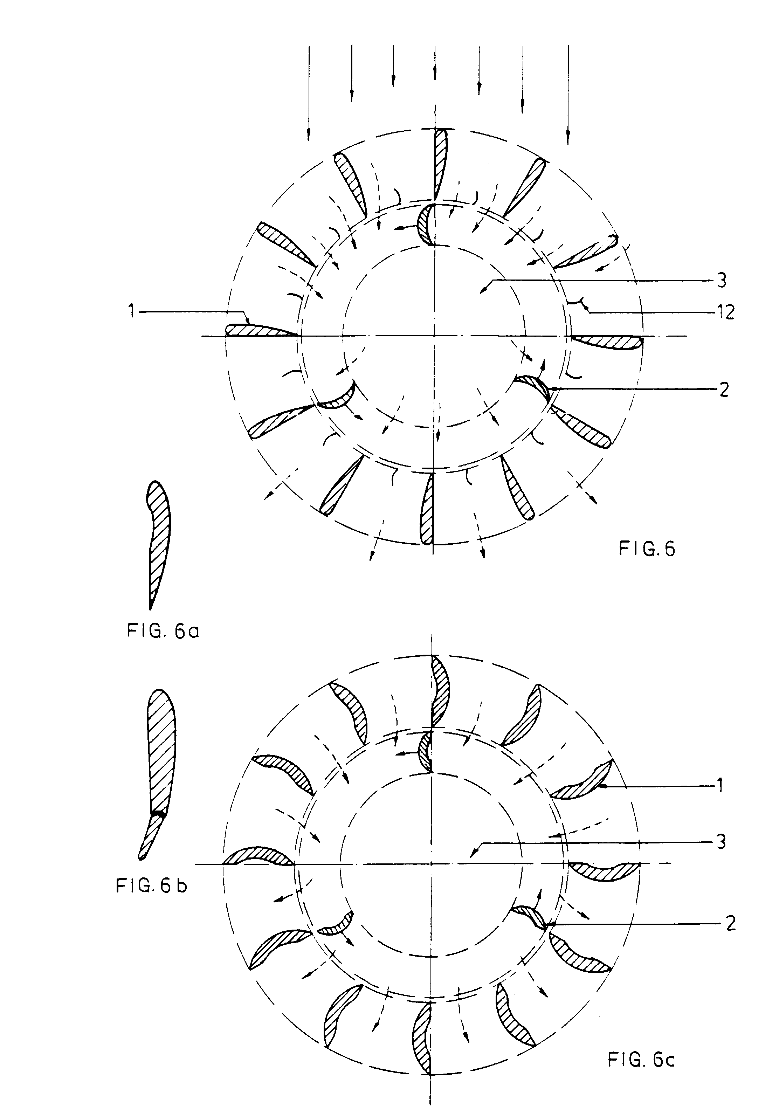

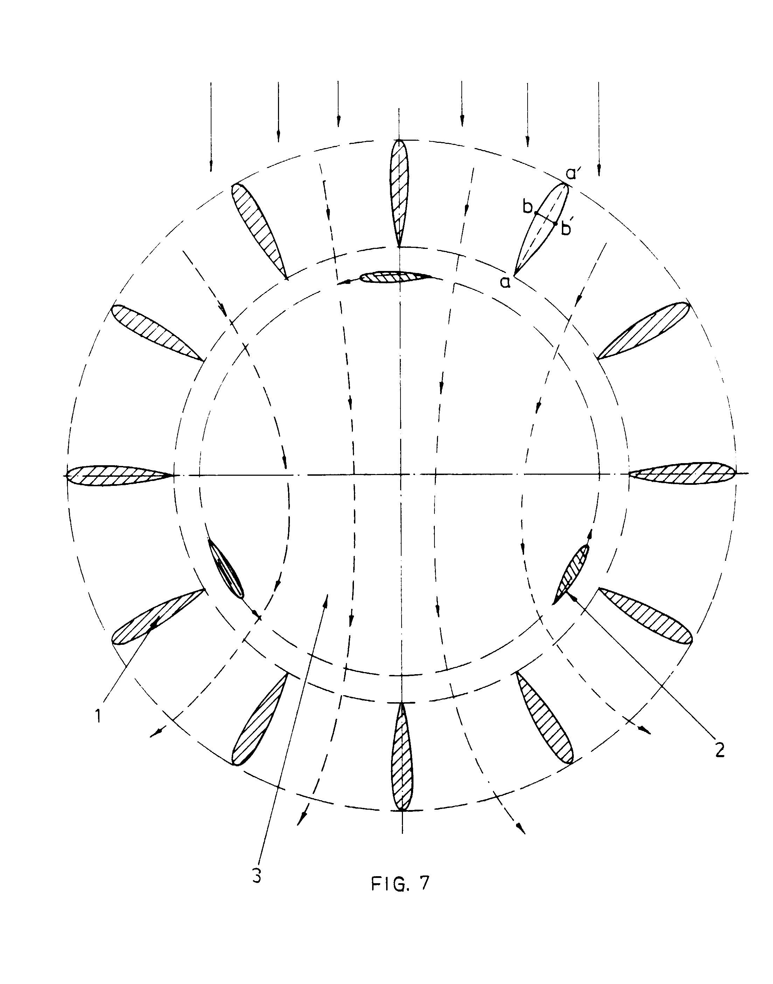

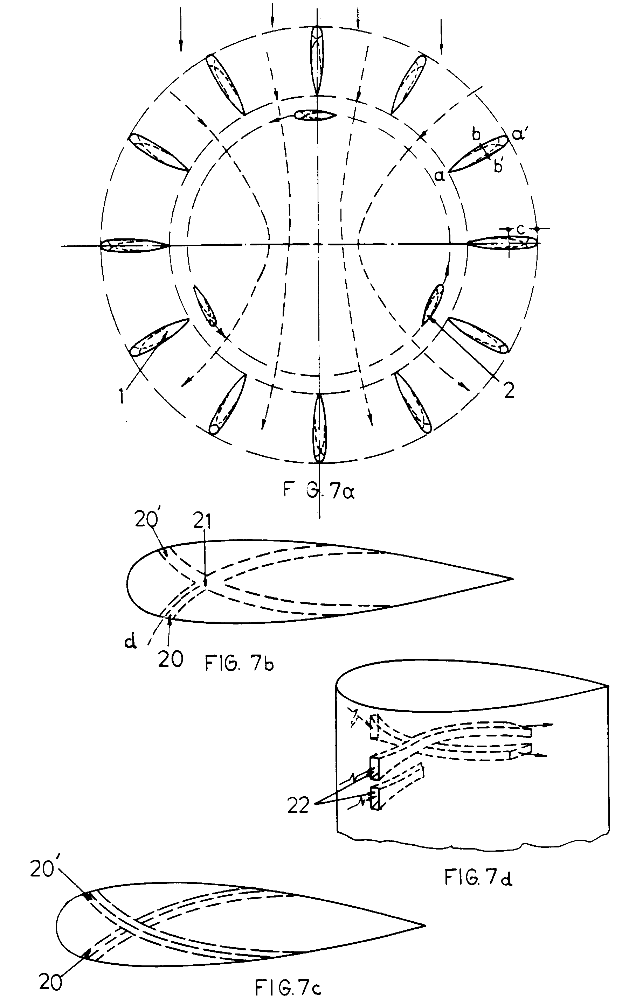

" Figures 6, 6c, 7, and 7a show planar cross sectional views of the proposed wind machine taken along line II-II' (Fig.1) which denotes a transversal plane passing through the machine perpendicularly to its axis.

There appear various profile configurations for the guide vanes and rotor blades. These profile sections are of an aerodynamic shape with the rather pointed parts forming the edges of the blade or vane elements and the rather flattened ones forming their faces.

The straight line between the edges is the chord and its length denotes the width of the blade or vane element. The line perpendicular to the chord between the two faces at their most distant point apart is the cross line and denotes the thickness of a blade or vane element. In those above Figures, the outer side of the wind turbine machine is the one towards the external circumference, whereas the inner side is the one towards the central axis of the machine. Also, the front side is the one towards the direction of the rotor rotation, whereas the rear side is the opposite one.

The wind flow passing through the machine is affected, diverted and finally exploited mainly by the guide vanes and rotor blades although also the supporting means can contribute to that as well, with their shape funneling the flow (Fig.1c) and inducing an infuser and a difuser action on the upstream or downstream sides of the machine respectively, in a vertical application of the Bernouli effect and in addition to the one caused by the guide vanes in a latteral plane.

The main influential characteristics of the blade and vane elements of the machine are the shape of their profile section, their total number, their relative dimensions and relative disposition.

The central void in the middle of the rotor is also an important feature of the machine. Its relative diameter dictates and influences the aerodynamic transparancy and the solidity of the engine. When the central void is relatively small-narrow the aerodynamic transparancy is less causing raised by-pass flows and consequently high losses, as the solid parts of the engine occupy more space extending closer to the centre. After a certain limit their contribution in absorbing energy from the flow becomes negative because they block the flow passage. If on the contrary the central void is too wide then the left-over space for the solid parts is not enough for them to be able to perform a proper flow handling and extract the maximum possible power. This delicate balance is destroyed if any foreign object stands in the middle of this central void even if it is a small one.

At this point it is to be noted that the aerodynamics of the cross wind turbine machines and particularly the shrouded ones, are very demanding in proper conceptual approach and also very sensitive to any changes, even minor, in any of the afforesaid main influential characteristics. Any irregularity in any one of them even the slightest one, will be paid by heavy loss of power. That is the reason why seemingly small differences in the above characteristics between various machines, especially if they are sustained by different conceptual approach can mean a good deal of difference in their behaviour and results. Such examples are seen in the turbochargers, the jet pumps, ejector pumps, jet engines, the gas stove burner, the car carburator, and other similar devices.

The relative disposition of a guide vane on the periphery of the stator is characterized by its angle of declination (ω) as shown illustatively in Fig.2. This angle is formed between the chord line of a guide vane and a longitudinal plane (III-III') passing through the central axis of the machine, and the inner edge of the corresponding vane or its centre of rotation. Any such longitudinal plane divides the machine in two semicylindrical parts. The First longitudinal plane (III-III') is the one which is parallel with the direction of the inciding stream and divides the engine into right and left sides as we look towards the wind flow. The unfavourable side is the one through which the rotor blades move against the direction of the main wind stream. The favourable one is the other side. A Cross longitudinal plane perpendicular to the First one divides the two semicylindrical parts of the machine into four quadrants. Two windward or upstream quadrants and two leeward or downstream ones.

All guide vanes may be of fixed or controllable declination angle which may be regulated for a desired efficiency and capacity.

In this way the guide vanes might also be used as the speed regulating mechanism of the wind machine, even reaching the stage of completely shutting off the openings and thereby stopping the machine when required or when necessary e.g; to offer protection from extremely strong winds."

All guide vanes may be of fixed or controlable declination angle which may be regulated for a desired efficiency and capacity. In this way the guide vanes might also be used as the speed regulating mechanism of the wind machine, even reaching the stage of completely shuting off the openings and thereby stopping the machine when required or when necessary e.g. lo offer protection from extremely strong winds.

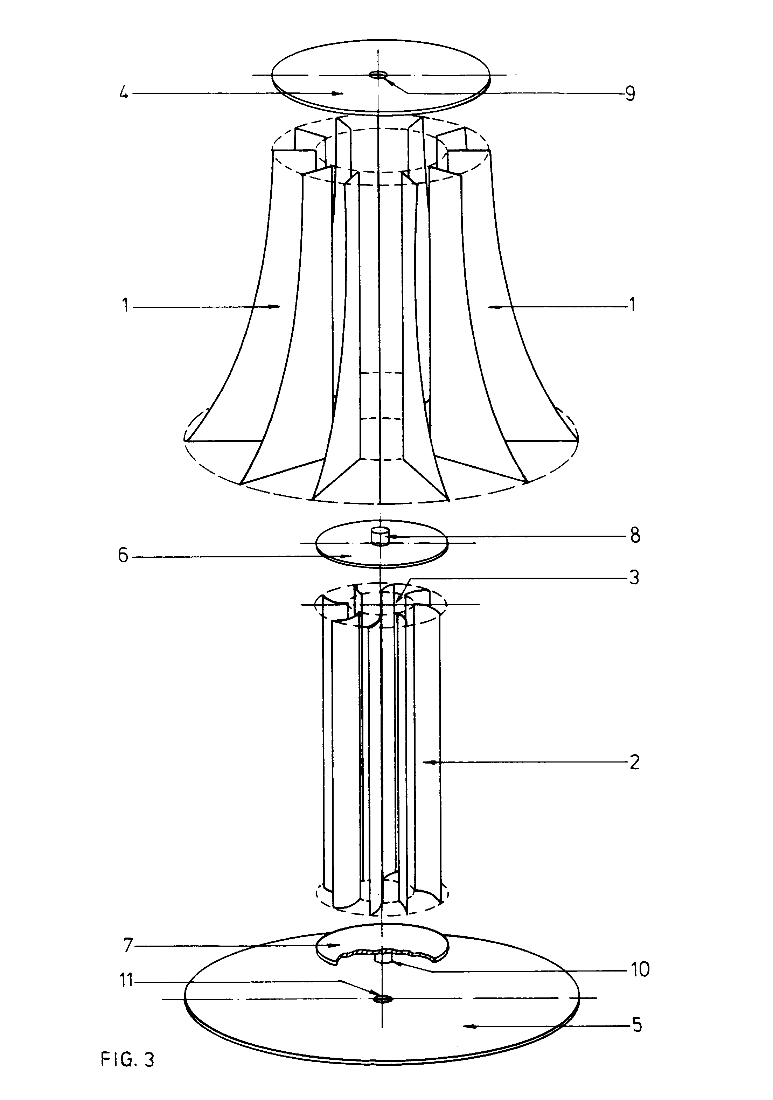

In order to arrange for a uniform distribution of wind power lengthwise the employed rotor and since the wind velocity normally varies from a minimum In the proximity of the ground surface to a maximum at the upper top region of the machine, the guide vanes may be shaped in a manner such as to balance these naturel irregularities, which might result to undesired effects in the operation of the machine. An illustrative arrangement of the guide vanes to fulfill this requirement is the conoidal shape as depicted in Fig.3, showing a downward divergent parabolic external shape of guide vanes and the rest parts of the engine as well in an exploded view. In order to avoid excessive mechanical stresses on the structure and rotor oscillatory vibration problems, the ratio between the height of the engine to its external base diameter in this case should not exceed 1.

Although the proposed wind turbine machine is primarily designed to be used in a vertical arrangement, it may also assume any desired inclination if such a case arises. Furthermore, the same machine could be alternatively employed to function with a working medium other than air, such as steam or liquid and present similar advantages as described in the above.

" In Fig. 6 is shown a cross sectional view of a first prefered embodiment of the proposed cross wind turbine machine, with guide vanes of the wing type airfoil profile shape (1) and rotor blades of the crescent aerodynamic profile shape (2).

The wing airfoil profile guide vanes are placed circumferentially in the stator with their chords in a radial disposition, their curved edges on the outer side and their pointed edges on the inner side of the machine, their front faces being flat and their rear faces curved convex. This disposition and shape allows them to deflect the incoming wind stream on the upstream side of the machine and impose it to follow a unidirectional path inside the engine, favourable to the direction of motion of the rotor blades, masking them at the same time from the coun'ter moving wind stream during their passage from the unfavourable semicycle of the machine. This flow deflection is induced by the lift effect aerodynamic interaction of the guide vanes with the flow, as they point their edges towards the stream; even if they are not inclined in any declination angle at all, thus achieving a slight deflection of the flow but without diminishing its velocity. On the contrary and in addition to the above, with their radially circumferential convergent towards the centre arrangement the guide vanes (1) act in a funneling mode concentrating the incoming wind or dispersing the outgoing one within the stator segments which are formed between any two adjacent guide vanes. Thus the guide vanes act as a kind of vertical nozzles, inducing a Bernoulli effect and a linear infuser or difuser action accross them, depending whether the corresponding stator segments lie on the windward or leeward side of the engine, this action resulting to an increased flow speed through the engine and accross the rotor blade paths both upstream and downstream, which is beneficial to engine performance.

This particular type of flow is the proper one to be combined with the crescent rotor blades as explained latter, because they exploit better a slightly deflected flow which after that returns to its original more or less straight path. Thus finally a more streamlined and unobstructed flow is achived without excessive deviation paths and appreciable turbulence.

These wing type guide vanes have a chord length not exceeding one fifth of the overall machine diameter, their cross line length varying between one fourth to one seventh of the chord. They may be of variable angle of declination which for operational application could be swung ± 10 degrees in either direction from their original radial disposition. Their number may vary preferably between seven to to fourteen."

Between the main guide vanes there may be placed circumferentially the auxiliary small guide vanes 12 to assist guiding the airflow allowing thus wider spacing between main guide vanes. They are radially disposed on the inner side of the main guide vanes periphery. These auxilliary guide vanes may be of a flat, curved, crescent or airfoil profile either of the wing or the uniform symmetrical type, their width not exceeding half the width of the main ones.

The crescent aerodynamic type rotor blades have a profile resembling a moon quarter or even a half moon in shape, and are suitable for higher wind and rotor speeds than the conventional non aerodynamic foiled counterparts which function on the drag effect principle. They are of a symmetric form with a convex front surface and a concave or flat rear one, their chords placed radially and symmetrically on the rotor periphery, each chord line length between the inner and outer edges not exceeding one fifth the engine diameter and their cross line length at the thickest point between front and rear surfaces not exceeding half their chord length. They be of variable angle of declination, controllable electronically or mechanically for maximum efficiency, but which for operational applications, should not exceed ± 10 degrees in either direction from their original radial disposition so as to keep always their chords paralel with the apparent airflow across them. Their total number may vary between two to eight, depending on the rotor diameter and the applicable ratio between the working fluid speed to the rotor blade speed.

The above symmetrical crescent rotor blades perform in a curious way. When they are oriented with their chord lines paralel to the apparent stream flow or air flow, they react in an aerodynamic lift effect way which does not impose appreciable back pressure in the flow, but induces high blade speed which is beneficial for the engine efficiency as the last one rises when the transfer of energy from the flow stream to the rotor blades is done in high speeds. This may require a small adjustment in their declination angle. If this adjustment is overdone or if it is done in the reverse direction then the blade will react progressively on the drag effect, the flow will gradually be opposed and finally the machine will stop.even.

This kind of crescent shape profile could be alternatively employed for the guide vanes as well, with their chords in a radial or slightly inclined position not exceeding ± 10 degrees in either direction, their faces being employed in a reverse sense than the, arrangement for the rotor blades, the front side being curved concave or flat and their rear one being convex, their relative dimensions and number being the same as for the above wing type guide vanes.

Guide vanes of the wing type airfoil profile shape may be curved convex on the rear side face and partially concave on the front face, designated then as cambered wing profile guide vanes (Fig. -a).

They may also be provided with a small rudder like tail fin for guiding further the airstream if necessary (Fig. 6b).

Alternatively guide vanes of the modified crescent airfoil profile section (1 Fig. 6c) could be used instead with the same relative disposition, number and relative dimensions as their comparative counterparts as above extended. The modified crescent profile shape is characterized by a flat front surface which has a partial concave part towards their middle. Their rear surface is curved convex and meets the front surface at the two flat portions forming thus two acute edges.

Also, rotor blades of the modified crescent airfoil profile section (2 Fig. 6c) could be used with the same relative disposition, numbers and relative dimensions as the above specified symmetric crescent rotor blades. Their profile shape is identical to the guide vanes one, with a flat rear side being partially concave towards their middle part, their front face being curved convex and meeting the rear face at the two extreme flat portions forming thus two acute edges.

Figure 7 shows an alternative preferred embodiment of the wind turbine machine with uniform airfoil profile guide vanes 1, whose both front and rear sides are curved symmetrically in a convex profile, having an outer curved edge and an inner acute edge, placed circumferentially around the rotor with their chordes in a radial arrangement symmetrically and equally spaced. Their total number may vary between seven and fourteen. In an exemplary way, a chord line a-a' is shown connecting the edges of the airfoil profile of one of the guide vanes, chord being defined as the straight line between the ends of an arc. The cross line b-b' is the perpendicular line to the chord between lie side surfaces of the airfoil at their thickest point.

The uniform ailfoil guide vanes due to their shape and disposition divert the ailflow with minimum turbulence employing the lift effect and thereby minimizing power losses, in a uniform way for both sides of the airflux creating a symmetrically concentric air stream passing through the engine and a balanced masking effect for both sides of the machine. Therefore, this type of machine presents a Venturi/Bernoulli behaviour and qualifications both effects being demonstrated in the horizontal plane or in a sense perpendicular to the axis of rotation and initiated by the guide vanes being disposed symmetrically and forming an elongated diffuser machine inlet or outlet between each abjacent pair of them. The chord line of these guide vanes varies preferably between one fourth to one eighth of the overall machine diameter, and it is four to eight times longer than their cross line and 2,5 times or more longer than their respective distance "C".

With this kind of symetrically arranged airflow it is made possible and preferable to use rotor blades of the symmetric airfoil type being suitable for high speeds too. Two to eight such rotor blades according to the size of the rotor diameter and the relative wind speed to rotor blade speed ratio, symmetrically disposed occupy a tangential position on the rotor periphery as shown in Fig.7. They are characterized by a front curved edge towards the direction of rotation and a rear acute edge in the opposite direction, inner and outer sides, facing towards the central or the external parts of the engine respectively, and their upper and lower ends which the mounted fixedly or rotatable onto the top and bottom rotor discs. The chord line length of each rotor blade is preferably less than one fifth of the overall engine diameter, said chord line being four to seven times longer than the cross line of the respective airfoil profile and 2.5 times or more longer than the respective distance "C".

Also, due to the particular arrangement of the guide vanes creating the afforesaid airstream pattern, the rotor blades as disposed relatively act with their chords perpendicular to the pasing by airstream during their entire cycle of rotation, this arrangement holding good for both sides of their airfoil profile, this constituting a basic feature in this type of engine. The ratio between engine overall Diameter to rotor diameter varies between 1.5 to 2 times.

The declination angle of the above guide vanes may be varied to control the air flow if needed, but for operational applications this regulation need not be more than ± 10 degrees in either direction from their original radial disposition. Similarly, variation of the incidence angle may also be applied to the rotor blades for regulating or feathering purposes to stop the machine whenever needed.

In this case also the rotor blades of the aerodynamic crescent type or the modified one could be used as well, in the maner extended before.

Figure 7a shows an improved version of the wind machine appearing in Fig. 7, employing pairs of air passages or ducts (20 & 20') inside the guide vanes and the rotor blades, forming paths of symmetrical profile but of an opposing sense, each such duct 20 or 20' connecting the frontal external sides of the blades, where the inciding airstream forms regions of high pressure, with the opposite lying sides of low pressure regions towards their tails.

These air passages perform a twofold action, one to equalize pressure differences along the external sides of the guide vane or rotor blade elements reducing the drag exerted upon them and second, to exploit that part of the airstream passing through them to produce more propelling thrust for the rotor blades or reduce vortices and form a streamlined and power producing flow for the guide vanes.

Their action is maximum when the central line -d- through ducts 20 or 20' (Fig.7b) at the intake of the air passages is parallel to the direction of the apparent airflow and gets minimum when the airflow direction is perpendicular to this intake central line, as for example is the case when the guide vanes chord is parallel with the airflow. The angle formed in the horizontal plane between the central line of the air passage intake in respect to the chord line should not be less than 20 degrees and not more than 70 degrees, as measured from the front side, this relative angle being dictated by the desired or foreseen interaction between the apparent flow and the blade element.

The pairs of air passages may be of the single duct type depicted in Fig.7b wherein one duct commences from an air intake in the frontal region of the vane or blade element in front of the cross line, and the other duct commence from a similar air intake on a symmetrically opposite side of the same front part, then crossing the opposite duct through a common junction (21), each duct then continuing its path which may be arcuate or eliptical in profile, towards the opposite side at the aft part of the element behind the cross line where the airflow is discharged in a direction parallel to the chord of the said vane or blade element. These ducts may extend throughout the entire height of the respective guide vane or blade elements interrupted only by the necessary interposed connecting and reinforcing elementary required laminar frames arranged in a lateral direction. Their width should not exceed one third the cross line length, otherwise double or even multifold duct system should be employed, the second duct running paralel and adjacent to the first one as shown in Fig.7c, or even further apart but always commencing in front of the cross line and terminating behind it. In this case it is preferable the two opposite side airpassages to cross over on different successive vertical levels isolated from each other and dividing between them the whole height of the blade element. This can be achieved by using ducts of constant cross sectional area throughout their length but of variable height and width in inverse proportions in respect to each other, commencing from a lowest height at the crossing over point and where there is their widest part, then progressively funelling verticalwise, the duct height augmenting towards their ends up to the intakes and exhausts respectively, their width narrowing accordingly so the product of height and width is kept constant or almost constant. Alternatively, ducts of constant dimensions throughout their length could be used spaced enough apart in vertical level to allow for crossing over each other, but then the air intake would be reduced. This could be compensated upto a certain extent by allowing more width for the ducts.

Concluding, the first versions of this concept namely those appearing in Figures 6 and 6c could be characterized as vortex effect applying machines, since their structure is such so as to produce a circular airpath deflection out of the more or less straight inpinging windstream and then using that unirectional airpath formed inside the engine to convert wind power into mechanical momentum on the rotor shaft. Alternatively, the latter engine versions appearing in Fig. 7 and 7a, by inducing twin horizontal airpaths symmetrically convergent towards the middle of the engine is acting like an aerodynamic lens and a venturi effect appears across the rotor blades in the horizontal plane or the plane perpendicular to the rotor axis, this constituting a distinctive characteristic of this engine type. It must hereby be noted that the present description was made by reference to illustrative embodiments presenting the basic commponents of the invention. It is understood that accessories used in the invention, such as the bearings, being of known technology; they could be used in different types and ways according to manufacturers instructrions or for ease of fabrication.

Also the invention could be employed in conjunction with various complementary equipment of known technology such as electric generators, pumps or compressors, coupled in various ways for use in deverse applications of power production.

## Claims

1. A cylindrical turbine machine for generating power by the rotation of a generally cylindrical rotor about its axis by a fluid stream moving in a cross direction relative to the rotor axis, the rotor being mounted for rotation inside a generally cylindrical stator;
wherein the rotor comprises:
a plurality of elongate rotor blades (2) placed symmetrically and equidistantially on the rotor circumference, their length extending parallel to the rotor axis, each said rotor blade having front and rear surfaces, inner and outer edges and first and second opposing ends, wherein relative to the rotor axis said ends are axially aligned;
first and second opposing rotor support means for supporting first and second ends of the rotor blades respectively;
wherein the stator comprises:
a plurality of equally spaced elongate fluid guide vanes (1) placed in surrounding relationship to said rotor, their length extending parallel to the elongate axis of the stator, the stator axis being co-incident with the rotor axis, each said guide vane having front and rear surfaces, inner and outer edges, and first and second lengthwise opposing ends, wherein relative to the cylindrical stator said edges are radially aligned and said opposing ends are axially aligned;
the first and second opposing ends of each guide vane being mounted to a respective one of first and second opposing stator support means;
a radial distance between the axis of rotor rotation and the outer edge of any guide vane defining the overall machine radius;
said rotor support means placed intermediate said stator support means and being centrally and rotatably mounted on the inner sides of the respective stator support means;
the turbine machine being characterized:
in that the stator comprises not more than fourteen guide vanes;
in that the rotor comprises between two to eight rotor blades;
in that each rotor blade has a uniform cross-section of a symmetrical crescent shape, having pointed angular inner and outer edges radially aligned, a convex front surface and a rear surface, said front surface defining an arc which meets the rear surface at said inner and outer edges but which surfaces are separated at their furthest spaced point by a cross line distance not exceeding one half of a chord line taken between said inner and outer edges of said rotor blades, said chord line having a length not more than one fifth of the overall machine diameter;
in that it further comprises means for adjusting the angle of declination of the rotor blades ± 10 degrees in either direction from their original radial disposition so that said rotor blade chords are kept substantially parallel to the apparent fluid flow across them during operation;
and in that said rotor blades define a hollow cylinder with an open and unobstructed cylindrical space (3) between the rotor blades of a diameter not less than one third the overall machine diameter.

2. A turbine machine according to claim 1 characterized in that each rotor blade (2) has a concave rear surface.

3. A turbine machine according to claim 1 characterized in that each rotor blade (2) has a flat rear surface.

4. A turbine machine according to claims 1, 2 or 3 characterized in that each guide vane (1, Fig. 6) is of an airfoil wing type profile section having a flat front surface and a convex rear surface, the length of a cross line at the most distant point between said front and rear surfaces being between 1/4 to 1/7 of a chord line length of the guide vane, each vane having a curved outer edge and a pointed inner edge, a chord length between said edges not exceeding 1/5 the overall machine diameter, the chord line of each guide vane being radially disposed and equally spaced on surrounding relationship to said rotor, with controllable angle of declination for operational conditions up to ± 10 degrees in either direction from their original radial disposition.

5. A turbine machine according to claims 1, 2 or 3 characterized in that each guide vane (Fig. 6a) is of a cambered airfoil wing type profile section having a partially concave and partially flat front surface and a convex rear surface, the length of a cross line between said front and rear surfaces being between 1/4 to 1/7 of a chord line length of the guide vane, each guide vane having a curved outer edge and a pointed inner edge, a chord length between said edges not exceeding 1/5 of the overall machine diameter, the chord line of each guide vane being radially disposed and equally spaced on a surrounding relationship to the rotor, with controllable angle of declination for operational conditions up to ± 10 degrees in either direction from their original radial disposition.

6. A turbine machine according to any preceding claim characterized in that said guide vanes have a main body and an articulated aileron form inner edge capable of altering its angular direction in respect to the main body of the guide vane (Fig. 6b).

7. A turbine machine according to claims 1, 2 or 3 wherein each guide vane has a symmetrical airfoil profile section with arcuate front and rear surfaces, a cross line length between said front and rear surfaces varying between 1/4 to 1/7 of a chord length of the guide vane, a curved outer edge and a pointed inner edge, a chord length between said edges being between 1/4 to 1/7 of the overall machine diameter, said guide vanes placed with their chords radially and symmetrically disposed on a surrounding relationship to said rotor, with controllable angle of declination up to ± 10 degrees during operation in either direction from their original radial disposition (1 - Fig. 7).

8. A cylindrical turbine machine for generating power by the rotation of a generally cylindrical rotor about its axis by a fluid stream moving in a cross direction relative to the rotor axis, the rotor being mounted for rotation inside a generally cylindrical stator;
wherein the stator comprises a plurality of elongate fluid guide vanes (1), each guide vane having front and rear arcuate surfaces, a curved outer edge (a') and an inner edge (a) radially aligned relative to the rotor axis, first and second lengthwise opposing ends axially aligned relative to the rotor axis, the first and second ends of each guide vane being mounted to a respective one of first and second opposing stator support means, said guide vanes being substantially equally spaced from one another on a periphery of the stator with their lengths parallel to an elongate axis of the stator, the axis of the stator being co-incident with the rotor axis, the guide vanes defining an internal cylindrical space, a radial distance between the axis of rotor rotation and the outer edge of any guide vane defining the overall machine radius;
wherein the rotor is disposed within the space defined inside the stator guide vanes, the rotor comprising a number of elongate rotor blades (2) of uniform symmetrical airfoil profile section placed symmetrically and spaced equally on the rotor periphery, their length parallel to the rotor axis, each said rotor blade having first and second lengthwise opposing ends, a curved front edge and an angular pointed rear edge, arcuate outer and inner surfaces, wherein relative to the cylindrical rotor said edges are in tangential disposition and said ends are in axial disposition, the first and second opposing ends of each rotor blade being carried by a respective one of first and second opposing rotor support means, said rotor support means placed intermediate the stator support means and being centrally and rotatably mounted on inner sides of the respective stator support means;
the turbine machine being characterized:
in that the guide vanes are of the uniform symmetrical airfoil profile section with a pointed inner edge (a-Fig. 7), their number varying between 7 to 12, each guide vane having a chord length between 1/4 to 1/7 of the overall machine diameter, and a cross line length taken perpendicularly to the chord line at the point of greatest distance between said front and rear arcuate surfaces varying between 1/4 to 1/7 of the chord length;
in that each guide vane is provided with means for controlling its angle of declination for operational conditions varying ± 10 degrees in either direction from their original radial disposition;
in that the rotor comprises a number of rotor blades varying between 2 to 8, each rotor blade having a chord line length not exceeding 1/5 the overall machine diameter, and a cross line length taken perpendicularly to the chord line at the point of greatest distance between said inner and outer arcuate surfaces varying between 1/4 to 1/7 of the chord length;
in that each rotor blade is provided with means for controlling its angle of declination for operational conditions varying ± 10 degrees in either direction from its original tangential disposition;
in that said rotor blades define a void internal cylindrical space (3) free from any obstacles and having a diameter not less than half the overall machine diameter.

9. A turbine machine according to claim 8, wherein any guide vane and rotor blade profile sections being divided by their respective chords in two sides and by their respective cross lines in two portions, the leading portion comprising the curved edge, and the trailing portion comprising the pointed edge, are characterized in that each guide vane and rotor blade includes at least a pair of fluid ducts, the first fluid duct (20) running from an inlet on one side surface of the leading portion then passing through said guide vanes / rotor blades to an outlet on the other side surface in the trailing portion; the second fluid duct running from an inlet on the other side surface of the leading portion then passing through said guide vane / rotor blade to the one side surface of the trailing portion; both ducts intersecting in a centrally located common junction point (21); both ducts extending the whole length of said guide vanes / rotor blades, interrupted only by the stiffening reinforcing members of said guide vanes/ rotor blades.

10. A turbine machine according to claims 8 and 9 characterized in that a plurality of intercrossing fluid ducts, in pairs occupy the whole length of said guide vanes and rotor blades at different multiple succesive levels isolated from one another.

11. A turbine machine according to any preceding claim, where said rotor support means comprise a first pair of opposing circular rotor discs (6, 7), substantially equal in diameter to the rotor, said rotor discs supporting respectively on their periphery the opposing ends of the rotor blades (2), each said rotor disc having a stub shaft (8, 10) extending outwardly from its centre, a second pair of opposing circular stator cover plates (18, 19) placed parallel and externally from said rotor discs (6, 7), of a diameter equal to or greater than the overall machine diameter, said cover plates supporting on their periphery the respective opposing ends of said guide vanes (1) and having bearing means (9, 11) at their centre for mounting rotatably the respective rotor stub shafts so as the rotor is rotatably mounted within the hollow central cylindrical space of the stator, said supporting means characterized in that each said cover plate is of a generally flat in frontal section having on the inner surface a centrally located circular flat recess of a depth and diameter adequate to accomodate flush and free for rotation the respective rotor discs so as the internal opposing faces of the supporting means from generally continuous flat surfaces except for the small gap between cover plates and rotor discs.

12. A turbine machine according to any of claims 1 to 10, wherein said supporting means comprise a first pair of opposing circular rotor discs (23, 23') of a substantially equal diameter to the rotor, said rotor discs (23, 23') respectively supporting on their periphery the opposing ends of the rotor blades (2), each said rotor disc having a stub shaft (8, 10) extending outwardly from its centre and a curved inner surface on the opposite inner side, a second pair of opposing circular stator cover plates (24, 24') placed substantially parallel externally from said rotor discs (23, 23') and having a diameter equal to or greater than the overall machine diameter, said cover plates supporting on their periphery the respective opposing ends of said guide vanes (1) and having bearing means in their centre for mounting rotatably the respective rotor stub shafts (8, 10) whereby the rotor is rotatably mounted within the hollow central cylindrical space of the stator, said supporting means characterized in that, said stator cover plates (24, 24') have flat outer surfaces and curved inner surfaces converging towards the centre of the machine, said curved stator inner surfaces bearing a conical recess centrally disposed among the guide vanes, of adequate diameter and depth to accomodate flush and rotational the opposing rotor discs (23, 23') in such a way so as each of the internal opposing faces of the supporting means constitutes a continuous spherical section surface except for the small gap between cover plates and rotor discs, so said internal faces of the supporting means assist a passage of the fluid flow through the machine with additional ventouri effect qualifications exerted on the longitudinal plane.

13. A turbine machine according to any preceding claim, characterized in that said guide vanes (1) are of a conoidal, parabolic, downward divergent general shape, so that said outer edges of said guide vanes (1) flare outwardly from said upper to said lower ends thereof, wherein the ratio between the overall height of said guide vanes to the overall machine base diameter does not exceed 1.

14. A turbine machine according to any preceding claim, characterized in that it further comprises a plurality of auxiliary fluid guide vanes (12) circumferentially disposed around the rotor, equally spaced and symmetrically interposed between the guide vanes, said auxiliary fluid guide vanes having a chord length not exceeding half the chord length of the guide vanes (1).

15. A turbine machine according to claim 14, characterized in that said auxiliary fluid guide vanes are selected from the group consisting of guide vanes that have:
- an arcuate profile section;
- a crescent profile section;
- an airfoil profile section of the wing type;
- a uniform symmetrical airfoil profile section.

16. A turbine machine according to claim 1 characterized in that each rotor blade (2) has a rear surface partially flat near the edges and partially concave at its middle part.

17. A turbine machine according to claims 1, 2, 3 or 16 characterized in that each guide vane (1, Fig. 6c) is of an airfoil modified crescent profile section having a front surface partially flat near the edges and partially concave at its middle part, a convex rear surface, the length of a cross line at the most distant point between said front and rear surfaces, varying between 1/4 to 1/7 of a chord line length of the guide vane, each vane having pointed inner and outer edges, a chord length between said edges not exceeding 1/5 the overall machine diameter, the chord line of each guide vane being radially disposed and equally spaced on surrounding relationship to said rotor, with controllable angle of declination for operational conditions upto ± 10 degrees in either direction from their original radial disposition.

## Patentansprüche

1. Eine zylindrische Turbinenmaschine für Stromerzeugung durch die Umdrehungen eines allgemeinen zylindrischen Rotors um die Achse durch einen flüßigen Strom, der sich auf eine Kreuzrichtung hin bezüglich der Rotorachsen bewegt, wobei der Rotor zu Umdrehungen innerhalb eines allgemeinen zylindrischen Stators montiert ist;
dabei schließt der Rotor ein:
eine Vielfalt von verlängerten Rotorklingen (2), symmetrisch und in gleichen Abständen auf der Rotorumgebung angebracht, wobei ihre Länge parallel zur Rotorachse verlängert ist, wobei jede einzige genannte Rotorklinge vordere und rückwärtige Oberflächen hat, innere und äußere Kanten und erstrangige und zweitrangige entgegengesetzte Enden, worin bezüglich der Rotorachse die besagten Enden achsenmäßig ausgerichtet sind;
erstrangige und zweitrangige Unterstützungsmittel zur Unterstützung der erstrangigen und zweitrangigen Enden der Rotorklingen jeweils;
wobei der Stator beinhaltet:
eine Vielfalt von Leitungen, die Flüßigkeit leiten (1) mit gleichmäßig verlängerten Abständen, die zum besagten Rotor in einem umkreisenden Verhältnis gestellt sind, wobei ihre Länge parallel zur verlängerten Achse des Stators ausgerichtet ist, die Statorachse mit der Rotorachse zusammenfällt, jede besagte führende Leitung vordere und rückwärtige Oberflächen besitzt, innere und äußere Kanten, und erstrangige und zweitrangige längenmäßig entgegengesetzte Enden, worin bezüglich des zylindrischen Stators die besagten Kanten radialförmig ausgerichtet sind und die genannten entgegengesetzten Enden achsenmäßig ausgerichtet sind;
die erstrangigen und zweitrangigen entgegengesetzten Enden jeder führenden Leitung sind zu je einem der entsprechenden erstrangigen und zweitrangigen entgegengesetzten Unterstützungsmitteln des Stators angebracht;
ein radialer Abstand zwischen der Achse des Rotorumlaufs und der äußeren Kante jeder führenden Leitung bestimmt den gesamten Maschinenradius;
die genannten Unterstützungsmittel des Rotors sind zu den genannten Unterstützungsmitteln des Stators dazwischenliegend angebracht und sind zum Zentrum hin und rotierungsfähig an den inneren Seiten der betreffenden Unterstützungsmittel des Stators angebracht.;
die Turbinenmaschine ist gekennzeichnet:
darin, daß der Stator nicht mehr als vierzehn führende Leitungen beinhaltet;
darin, daß der Rotor zwischen zwei und acht Rotorklingen beinhaltet;
darin, daß jede Rotorklinge eine gleichförmige Kreuzsektion besitzt von einer symmetrisch ansteigenden Gestalt, wobei spitzwinklige innere und äußere Kanten radialförmig ausgerichtet sind, eine konvexe vordere Oberfläche und eine rückwärtige, die genannte vordere Oberfläche einen Bogen bildet, der die rückwärtige Oberfläche an den genannten inneren und äußeren Kanten trifft, aber welche Oberflächen an der Spitze ihres weitesten Abstandes durch einen Kreuzlinienabstand getrennt sind, der nicht über die Hälfte von der Gurtlinie zwischen den genannten inneren und äußeren Kanten der genannten Rotorklingen hinausreicht, wobei die genannte Gurtlinie eine Länge besitzt, die nicht mehr als ein Fünftel des gesamten Durchmessers der Maschine beträgt;
darin, daß es darüberhinaus über Mittel verfügt zur Angleichung des Deklinationswinkels der Rotorklingen ± 10 Grad in beiden Richtungen von ihrer ursprünglichen radialförmigen Anordnung, so daß die genannten Gurte der Rotorklingen im wesentlichen parallel zum offenbaren Flüßigkeitsstrom während des Arbeitsvorgangs über diese gehalten werden;
darin, daß die genannten Rotorklingen einen hohlen Zylinder darstellen mit einem offenen und ungehinderten Abstand (3) zwischen den Rotorklingen mit einem Durchmesser weniger als ein Drittel des gesamten Durchmessers der Maschine.

2. Eine Turbinenmaschine gemäß Anspruch 1 ist dadurch gekennzeichnet, daß jede Rotorklinge (2) eine konkave rückwärtige Oberfläche besitzt.

3. Eine Turbinenmaschine gemäß Anspruch 1 ist dadurch gekennzeichnet, daß jede Rotorklinge (2) eine flache rückwärtige Oberfläche besitzt.

4. Eine Turbinenmaschine gemäß Ansprüche 1, 2 oder 3 ist dadurch gekennzeichnet, daß jede führende Leitung (1, Fig. 6) aus einer Sektion mit einem Profil des Typs eines Luftfolienflügels besteht, wobei er eine flache vordere Oberfläche und eine konvexe hintere Oberfläche besitzt, die Länge einer Kreuzlinie am meistentferntesten Punkt zwischen den genannten vorderen und rückwärtigen Oberflächen zwischen 1/4 und 1/7 der Grundlinienlänge des leitenden Flügels beträgt, jeder Flügel eine gebogene äußere Kante und eine spitze innere Kante besitzt, die Gurtlänge zwischen den genannten Kanten nicht über 1/5 des gesamten Durchmessers der Maschine hinausreicht, die Gurtlinie jedes leitenden Flügels radialförmig angelegt ist und in gleichmäßigem Abstand in einem umkreisenden Verhältnis zum besagten Rotor steht, mit einem kontrollierbaren Deklinationswinkel versehen ist für Bedingungen bezüglich des Arbeitsvorgangs bis zu ± 10 Grad in beiden Richtungen von ihrer ursprünglichen radialförmigen Anlegung.

5. Eine Turbinenmaschine gemäß Ansprüche 1, 2 oder 3 ist dadurch gekennzeichnet, daß jede führende Leitung (Fig. 6a) aus einer Sektion besteht und zwar mit einem Profil im Typ eines geschweiften Luftfolienflügels, eine teilweise konkave und teilweise flache vordere Oberfläche und eine konvexe rückwärtige Oberfläche besitzt, die Länge einer Kreuzlinie zwischen den genannten vorderen und rückwärtigen Oberflächen zwischen 1/4 und 1/7 einer Gurtlinie des leitenden Flügels besteht, wobei jede führende Leitung eine gekrümmte äußere Kante und eine spitze innere Kante besitzt, die Gurtlinie zwischen den genannten Kanten nicht mehr als 1/5 des gesamten Durchmessers der Maschine hinausreicht, die Gurtlinie jedes leitenden Flügels radialförmig angelegt ist und mit gleichmäßigen Abständen zu einem umkreisenden Verhältnis zum Rotor steht, mit kontrollierbarem Deklinationswinkel für Bedingungen bezüglich des Arbeitsvorgangs bis zu ± 10 Grad in beiden Richtungen von ihrer ursprünglichen radialförmigen Anordnung.

6. Eine Turbinenmaschine gemäß jedem vorangegangenen Anspruch ist dadurch gekennzeichnet, daß die genannten leitenden Flügel einen Hauptrumpf und eine innere Kante in der Art einer ausgesprochenen Aileron-Gelenkform besitzen, die fähig sind, ihre Winkeldirektion zu verändern und zwar in bezug auf den Hauptrumpf des leitenden Flügels (Fig. 6b).

7. Eine Turbinenmaschine gemäß Ansprüche 1, 2 oder 3, worin jeder leitende Flügel eine symmetrische luftfolienartige Profilsektion besitzt mit bogenartigen vorderen und rückwärtigen Oberflächen, wobei eine Kreuzlinienlänge zwischen den genannten vorderen und rückwärtigen Oberflächen zwischen 1/4 und 1/7 einer Gurtlänge des leitenden Flügels schwankt, eine gekrümmte äußere Kante und eine spitze innere Kante, eine Gurtlinie zwischen den genannten Kanten zwischen 1/4 und 1/7 des gesamten Durchmesseres der Maschine beträgt, die leitenden Flügel mit ihren Gurten radialförmig angelegt sind und symmetrisch in einem umkreisenden Verhältnis zum genannten Rotor steht, mit kontrollierbarem Deklinationswinkel bis zu ± 10 Grad während des Arbeitsvorgangs in beiden Richtungen von ihrer ursprünglichen radialförmigen Anordnung (1 - Fig. 7).

8. Eine zylindrische Turbinenmaschine für die Stromerzeugung durch die Rotation eines allgemein zylindrischen Rotors um seine Achse durch einen Stromfluß, der sich in Kreuzrichtung bezüglich der Rotorachse bewegt, ist für die Rotation innerhalb eines allgemein zylindrischen Stators angelegt;
worin der Stator eine Vielfalt von verlängerten leitenden Flügeln (1) beinhaltet, jede führende Leitung vordere beziehungsweise rückwärtige Oberflächen besitzt, eine gekrümmte äußere Kante (a') und eine innere Kante (a) radialförmig im Verhältnis zur Rotorachse ausgerichtet sind, erstrangige und zweitrangige längenmäßig entgegengesetzte Enden in bezug auf die Achse im Sinne der Rotorachse ausgerichtet sind, die erstrangigen und zweitrangigen Enden jedes leitenden Flügels jeweils an einem entsprechenden des erstrangigen und zweitrangigen entgegengesetzten Stators der Unterstützungsmittel angebracht sind, die genannten leitenden Flügel im wesentlichen in gleichen Abständen voneinander auf dem Umkreis des Stators mit ihren Längen parallel zur verlängerten Achse des Stators verteilt sind, die Achse des Stators mit der Rotorachse zusammenfallen, die leitenden Flügel einen internen zylindrischen Raum bilden, ein radialförmiger Abstand zwischen der Achse im Umdrehungssinn des Rotors und der äußeren Kante jeglichen leitenden Flügels den gesamten Maschinenradius bestimmt;
worin der Rotor innerhalb des Raums angelegt ist, der innerhalb der leitenden Flügel des Stators festgelegt ist, wobei der Rotor eine Anzahl von verlängerten Rotorklingen (2) besitzt und zwar von einer gleichförmigen symmetrischen Sektion mit Luftfolienprofil, die symmetrisch angelegt sind und gleichförmig auf den Rotorumkreis verteilt sind, ihre Länge parallel zur Rotorachse ist, jeder genannte Rotor erstrangige und zweitrangige längenmäßig entgegengesetzten Enden besitzt, eine gekrümmte vordere Kante und eine spitzwinklige rückwärtige Kante, bogenförmige äußere und innere Oberflächen, worin bezüglich des zylindrischen Rotors die genannten Kanten in einer tangentialen Anordnung sich befinden und die genannten Enden in achsenförmiger Anordnung sind, die erstrangigen und zweitrangigen entgegengesetzten Enden jeder Rotorklinge durch jeweils eine entsprechende der erstrangigen und zweitrangigen entgegengesetzten Unterstützungsmittel des Rotors getragen werden, die besagten Unterstützungsmittel des Rotors zwischen den Unterstützungsmitteln des Stators angebracht sind und zentralförmig und rotierungsfähig auf den inneren Seiten der entsprechenden Unterstützungsmittel des Stators angebracht sind;
die Turbinenmaschine ist gekennzeichnet:
darin, daß die leitenden Flügel aus der gleichförmigen symmetrischen luftfolienartigen Profilsektion mit einer spitzen inneren Kante (a - Fig. 7), ihre Anzahl zwischen 7 und 12 schwankt, jede führende Leitung eine Gurtlänge zwischen 1/4 und 1/7 des gesamten Durchmessers der Maschine besitzt, und die Kreuzlinienlänge rechtwinklig gemessen an der Gurtlinie am Punkt des größten Abstandes zwischen den genannten vorderen und hinteren bogenförmigen Oberflächen zwischen 1/4 und 1/7 der Gurtlänge schwankt;
darin, daß jede führende Leitung mit Mitteln zur Kontrollierung seiner Winkeldeklination ausgestattet ist und zwar für Bedingungen von Arbeitsvorgängen, die um die ± 10 Grad nach beiden Richtungen hin von ihrer ursprünglichen radialförmigen Anordnung schwanken.
darin, daß der Rotor eine Anzahl von Rotorklingen beinhaltet, die zwischen 2 und 8 schwanken, wobei jede Rotorklinge eine Gurtlinienlänge besitzt, die nicht 1/5 des gesamten Durchmessers der Maschine übersteigt und die Länge der Kreuzlinien, rechtwinklig gemessen, an der Gurtlinie an der Stelle mit dem größten Abstand zwischen den genannten inneren und äußeren bogenförmigen Oberflächen, die zwischen 1/4 und 1/7 der Gurtlänge schwanken;
darin, daß jede Rotorklinge mit Mitteln versehen ist zur Kontrollierung ihres Deklinationswinkels unter Bedingungen von Arbeitsvorgängen, die um die ± 10 Grad nach beiden Richtungen hin von seiner ursprünglichen tangentialen Anordnung schwanken;
darin, daß die Rotorklingen einen leeren internen zylindrischen Raum (3) bestimmen, frei von jeglichen Hindernissen und dabei einen Durchmesser von nicht weniger als die Hälfte des gesamten Durchmessers der Maschine besitzt.

9. Eine Turbinenmaschine gemäß Anspruch 8, worin alle Profilsektionen der leitenden Flügel und Rotorklingen durch ihre bezüglichen Gurte in zwei Seiten und durch ihre bezüglichen Kreuzlinien in zwei Teile geteilt sind, der führende Teil die gewölbte Kante miteinschließt und der darauffolgende Teil die spitze Kante miteinschließt, sind dadurch gekennzeichnet, daß jeder führende Flügel und Rotorklinge mindestens ein Paar von Flüßigkeitsleitungen einschließt, wobei die erste Flüßigkeitsleitung (20) von einer Öffnung auf einer Seitenoberfläche des führenden Teiles fließt, dann durch die genannten leitenden Flügel / Rotorklingen durchfließt in Richtung auf eine Auslaßsöffnung auf der anderen Seitenoberfläche am darauffolgenden Teil; die zweite Flüßigkeitsleitung von einer Einlaßöffnung auf der anderen Seitenoberfläche auf den leitenden Teil fließt, dann durch den genannten leitenden Flügel / Rotorklinge hindurchfließt in Richtung auf die einseitige Oberfläche des darauffolgenden Teiles; beide Leitungen überkreuzen sich an einem zentral gelegenen gemeinsamen Verbindungspunkt (21); beide Leitungen erstrecken sich entlang der ganzen Länge der genannten leitenden Flügel / Rotorklingen, und werden nur durch die erhärtenden Mittel zur Verstärkung der genannten leitenden Flügel / Rotorklingen unterbrochen.

10. Eine Turbinenmaschine gemäß der Ansprüche 8 und 9 ist dadurch gekennzeichnet, daß eine Vielfalt von einander sich kreuzenden Flüßigkeitsleitungen paarweise die ganze Länge der genannten leitenden Flügel und Rotorklingen belegen und zwar auf verschiedenen vielfachen aufeinanderfolgenden Ebenen, die voneinander isoliert sind.

11. Eine Turbinenmaschine gemäß jedem vorangegangenen Anspruch, wo die genannten Unterstützungsmittel des Rotors ein erstes Paar von entgegengesetzten Rotorscheiben (6, 7) enthalten, im wesentlichen gleichgestellt bezüglich des Verhältnisses Durchmesser zu Rotor, die genannten Rotorscheiben auf ihrem Umfang entsprechend die entgegengesetzten Enden der Rotorklingen (2) unterstützen, jede genannte Rotorscheibe einen Stumpfschaft (8, 10) hat, die sich von ihrem Zentrum aus nach außen hin erweitert, ein zweites Paar von entgegengesetzten kreisförmigen Statordeckplatten (18, 19), die parallel und außerhalb der genannten Rotorscheiben (6, 7) aufgestellt sind, einen Durchmesser gleichwertig zu oder größer als der gesamte Durchmesser der Maschine, die genannten Deckplatten auf ihrem Umfang die betreffenden entgegengesetzten Enden der genannten leitenden Flügel (1) unterstützen und wobei sie in ihrem Zentrum Lagerstützen (9, 11) für die rotierende Befestigung der betreffenden Stumpfschäfte des Rotors haben, so daß der Rotor in rotierendem Sinn innerhalb des hohlen zentralen zylindrischen Raums des Stators befestigt ist, die genannten Unterstützungsmittel dadurch gekennzeichnet sind, daß jede genannte Deckplatte aus einer allgemeinen Untiefe in der vorderen Sektion und dabei auf der inneren Oberfläche eine zentral liegende kreisförmige flache Vertiefung besitzt, und zwar von einer Tiefe und einem Durchmesser, die angemessen sind für die Anpassung des Zuflußes und frei sind für die Umdrehungen der betreffenden Rotorscheiben wie auch die inneren entgegengesetzten Oberseiten der Unterstützungsmittel von allgemein fortlaufenden flachen Oberflächen außer für die schmale Lücke zwischen Deckplatten und Rotorscheiben.

12. Eine Turbinenmaschine gemäß der Ansprüche 1 bis 10, worin die besagten Unterstützungsmittel ein erstrangiges Paar von entgegengesetzten kreisförmigen Rotorscheiben (23, 23') von einem im wesentlichen gleichwertigen Durchmesser zum Rotor beinhalten, wobei die genannten Rotorscheiben (23, 23') auf ihrem Umfang der Reihe nach die entgegengesetzten Enden der Rotorklingen (2) unterstützen, wobei jede der besagten Rotorscheiben einen Stumpfschaft (8, 10) besitzt, der sich vom Zentrum aus nach außen hin erweitert und eine gekrümmte innere Oberfläche zur gegenüberliegenden inneren Seite, ein zweites Paar von entgegengesetzten kreisförmigen Deckplatten des Stators (24, 24') sind im wesentlichen parallel auf der Außenseite der besagten Rotorscheiben (23, 23') angebracht und sie haben einen Durchmesser gleichwertig zu oder größer als der gesamte Durchmesser der Maschine, wobei die genannten Deckplatten auf ihrem Umfang die entsprechenden entgegengesetzten Enden der genannten leitenden Flügel (1) unterstützen und sie haben in ihrem Zentrum Lagerstützen, um die entsprechenden Stumpfschäfte des Rotors (8, 10) zu befestigen, wobei der Rotor im Umdrehungssinn innerhalb des hohlen zentralliegenden zylindrischen Raumes des Stators angebracht ist, die genannten Unterstützungsmittel dadurch gekennzeichnet sind, daß die genannten Deckplatten des Stators (24, 24') flache äußere Oberflächen haben und gekrümmte innere Oberflächen, die in Richtung auf das Zentrum der Maschine zusammenlaufen, wobei die genannten gekrümmten Innenoberflächen des Stators eine kugelförmige Vertiefung, zentral zwischen den leitenden Flügeln verteilt, aufweisen und zwar von angemessenem Durchmesser und einer Tiefe, um den Zufluß anzugleichen und im Umdrehungssinn die entgegengesetzten Rotorscheiben (23, 23') und zwar auf eine solche Weise, daß jede der innerwärtigen entgegengesetzten Oberseiten der Unterstützungsmittel eine ununterbrochene kugelförmige Sektionsoberfläche darstellt, außer für die schmale Lücke zwischen den Deckplatten und den Rotorscheiben, somit fördern die genannten innerwärtigen Oberseiten der Unterstützungsmittel den Durchlauf des Flüßigkeitsflußes durch die Maschine hindurch mit zusätzlichen Qualifikationen für den Ventouri-Effekt, angewendet auf der Längsebene.

13. Eine Turbinenmaschine gemäß allen voranstehenden Ansprüche ist dadurch gekennzeichnet, daß die genannten führenden Flügel (1) von einer kegelartigen, parabolischen, nach unten hin auseinanderlaufenden allgemeinen Gestalt sind, so daß die genannten äußeren Kanten der besagten leitenden Flügel (1) von den genannten obigen zu den genannten unteren Enden derselben nach außen hin glockenförmig auseinandergehen, wobei das Verhältnis zwischen der gesamten Höhe der genannten leitenden Flügel zu dem gesamten Durchmesser der Maschinenbasis 1 nicht überschreitet.

14. Eine Turbinenmaschine gemäß allen vorangegangenen Ansprüchen ist dadurch gekennzeichnet, daß sie weiterhin eine Vielfalt von behelfsmäßig flüßigkeitsleitenden Flügeln (12) verbindet, die im Umkreis rund um den Rotor angeordnet sind, in gleichmäßigem Abstand und symmetrisch zwischen den leitenden Flügeln angeordnet sind, wobei die genannten behelfsmäßigen Flügel, die Flüßigkeit leiten, eine Gurtlänge besitzen, die nicht die halbe Länge der Gurtlänge der leitenden Flügel (1) überschreitet.

15. Eine Turbinenmaschine gemäß Anspruch 14 ist dadurch gekennzeichnet, daß die genannten behelfsmäßigen Flügel, die Flüßigkeit leiten, aus einer Gruppe ausgewählt werden, die aus leitenden Flügeln bestehen, welche folgendes aufweisen:
- eine bogenförmige Profilsektion;
- eine ansteigende Profilsektion;
- eine Sektion mit Luftfolienprofil nach der Art eines Flügeltyps;
- eine einförmige symmetrische Sektion mit Luftfolienprofil.

16. Eine Turbinenmaschine gemäß Anspruchs 1 ist dadurch gekennzeichnet, daß jede Rotorklinge (2) eine rückwärtige Oberfläche besitzt, die an den Kanten teilweise flach ist und in ihrer mittleren Partie teilweise konkav ist.

17. Eine Turbinenmaschine gemäß der Ansprüche 1, 2, 3 oder 16 ist dadurch gekennzeichnet, daß jede führende Leitung (1, Fig. 6c) aus einer Sektion besteht, die ein durch Luftfolie abgeändertes zunehmendes Profil besitzt, wobei er nahe bei den Kanten eine teilweise flache vordere Oberfläche und an seinem Mittelstück eine konkave hat, eine konvexe rückwärtige Oberfläche, wobei die Länge einer Kreuzlinie an ihrem am meisten entferntesten Punkt zwischen den genannten vorderen und rückwärtigen Oberflächen, zwischen 1/4 und 1/7 der Gurtlinienlänge des leitenden Flügels beträgt, und dabei jeder Flügel spitze innerwärtige und außenwärtige Kanten besitzt, wobei eine Gurtlänge zwischen den genannten Kanten nicht über 1/5 des gesamten Durchmessers der Maschine hinausreicht, die Gurtlinie jedes leitenden Flügels radialartig angeordnet ist und in gleichwertigen Abständen im umkreisförmigen Sinn zum genannten Rotor, mit kontrollierbarem Deklinationswinkel für Bedingungen bei Arbeitsvorgängen bis zu ± 10 Grad in beiden Richtungen von ihrer ursprünglichen radialartigen Anordnung.

## Revendications

1. Une machine à turbine cylindrique pour produire de la puissance par la rotation d'un rotor généralement cylindrique autour son axe par un courant de fluide bougé à une direction croisée relativement à l'axe du rotor, le rotor étant monté pour rotation à l'intérieur d'un stator généralement cylindrique;
où le rotor comprends:
une pluralité de pales de rotor allongées (2) placées symétriquement et équidistantement à la circonférence du rotor, leur longueur se prolongeant parallèlement à l'axe du rotor, chaque pale du rotor ayant des surfaces antérieure et arrière, des bords intérieurs et extérieurs et des bouts opposés, premier et deuxième, où rélativement à l'axe de rotor les bouts sont axialement alignés;
moyens de support de rotor opposés premier et deuxième pour supporter respectivement le premier et deuxième bout des pales du rotor;
où le stator comprend:
une pluralité des vannes (1) guides de fluide allongées, également espacées, placées à relation environnante au rotor, leur longueur se prolongeant parallèlement à l'axe allongé du stator, I' axe du stator étant coïncident avec l'axe du rotor, chaque vanne guide ayant des surfaces antérieure et arrière, des bords intérieurs et extérieurs et des bouts opposés en longueur, premier et deuxième, où rélativement au stator cylindrique les bords sont radialement alignés et les bouts opposés sont axialement alignés;
les bouts opposés, premier et deuxième de chaque vanne guide étant montés aux respectifs des opposés moyens de support du stator premier et deuxième;
une distance radiale entre l'axe de rotation du rotor et le bord extérieur de chaque vanne guide définissant le rayon total de la machine;
les moyens de support du rotor placés intermédiairement aux moyens de support du stator et étant centralement et rotativement montés sur les côtés intérieurs des moyens respectifs de support du stator;
la machine à turbine est caractérisée:
à ce que le stator ne comprends pas plus que quatorze vannes guides;
à ce que le rotor comprends entre deux et huit pales de rotor;
à ce que chaque pale de rotor a une cross-section uniforme de forme croissant symétrique, ayant des bords intérieur et extérieur angulaires mordants radialement alignés, une surface antérieure convexe et une surface arrière, la surface antérieure définissant un arc qui rencontre la surface arrière aux bords intérieur et extérieur mais les surfaces sont séparées à leur point plus éspacé par une distance de ligne croisée ne surpassant pas la moitié de la ligne de corde, prise entre les bords intérieurs et extérieurs des pales du rotor, la ligne de corde ayant une longueur pas plus du cinquième de la diamètre totale de la machine;
à ce qu' il comprend, en plus, moyens pour ajuster l'angle de déclinaison des pales du rotor ± 10 degrés à chaque direction de leur disposition radiale originale afin que les cordes des pales du rotor sont maintenues substantiellement parallèles au courant apparent du fluide en travers de ces-ci pendant le fonctionnement;
et à ce que les pales du rotor définissent un cylindre creux avec un espace cylindrique ouvert et pas obstrué (3) entre les pales du rotor d'une diamètre pas moins du tiers de la diamètre totale de la machine.

2. La machine à turbine, suivant la révendication 1, caractérisée à ce que chaque pale (2) du rotor a une surface arrière concave.

3. La machine à turbine, suivant la révendication 1, caractérisée à ce que chaque pale (2) du rotor a une surface arrière plate.

4. La machine à turbine, suivant les révendications 1, 2 ou 3, caractérisée à ce que chaque vanne guide (1, Fig. 6) est d'une section profile airfoil de type aile ayant une surface antérieure plate et une surface arrière convexe, la longueur de la ligne croisée au point plus distant entre les surfaces antérieure et arrière étant entre 1/4 et 1/7 de la longueur de la ligne de corde de la vanne guide, chaque vanne ayant un bord extérieur courbe et un bord intérieur mordant, une longueur de corde entre les bords ne surpassant pas le 1/5 de la diamètre totale de la machine, la ligne de corde de chaque vanne guide étant radialement disposée et également espacée à relation environnante au rotor, avec un angle contrôlable de déclinaison pour conditions opérationnelles jusqu'à ± 10 degrés à chaque direction de leur disposition radiale originale.

5. La machine à turbine, suivant les révendications 1, 2 ou 3, caractérisée à ce que chaque vanne guide (Fig. 6a) est d'une section profile cambrée airfoil de type aile ayant une surface antérieure partiellement concave et partiellement plate et une surface arrière convexe, la longueur de la ligne croisée entre les surfaces antérieure et arrière étant entre 1/4 et 1/7 de la longueur de la ligne de corde de la vanne guide, chaque vanne guide ayant un bord extérieur courbe et un bord intérieur mordant, une longueur de corde entre les bords pas plus de 1/5 de la diamètre totale de la machine, la ligne de corde de chaque vanne guide étant radialement disposée et également espacée à relation environnante au rotor, avec un angle contrôlable de déclinaison pour conditions opérationnelles jusqu'à ± 10 degrés à chaque direction de leur disposition radiale originale.

6. La machine à turbine, suivant quelconque révendication précedente, caractérisée à ce que les vannes guides ont un corps principal et un bord intérieur articulé de forme aileron capable de changer sa direction angulaire relativement au corps principal de la vanne guide (Fig. 6b).

7. La machine à turbine, suivant les révendications 1, 2 ou 3, où chaque vanne guide a une section profile symétrique airfoil avec surfaces antérieure et arrière arquées, une longueur de ligne croisée entre les surfaces antérieure et arrière, variant entre 1/4 et 1/7 de la longueur de corde de la vanne guide, un bord extérieur courbe et un bord intérieur mordant, une longueur de corde entre les bords étant entre 1/4 et 1/7 de la diamètre totale de la machine, les vannes guides placées avec leur cordes radialement et symétriquement disposées à relation environnante au rotor, avec angle de déclinaison contrôlable jusqu'à ± 10 degrés pendant le fonctionnement à chaque direction de leur disposition radiale originale (1-Fig. 7).

8. Une machine à turbine cylindrique pour produire de la puissance par la rotation d'un rotor généralement cylindrique autour son axe par un courant de fluide bougé à une direction croisée relativement à l'axe du rotor, le rotor monté pour rotation à l'intérieur d'un stator généralement cylindrique;
où le rotor comprend une pluralité des vannes guides de fluide allongées (1), chaque vanne guide ayant des surfaces antérieure et arrière arquées, un bord extérieur courbe (a') et un bord intérieur (a) radialement alignés rélativement à l'axe du rotor, bouts opposés en longueur premier et deuxième axialement alignés rélativement à l'axe du rotor, les bouts premier et deuxième de chaque vanne guide étant montés aux respectifs des moyens de support du stator opposés premier et deuxième, les vannes guides étant substantiellement également espacées l'une de l'autre sur une péripherie du stator avec leur longueurs parallèles à un axe allongé du stator, l'axe du stator étant coïncident avec l'axe du rotor, les vannes guides définissent un espace intérieur cylindrique, une distance radiale entre l'axe de rotation du rotor et le bord extérieur de chaque vanne guide définissant le rayon total de la machine;
où le rotor est disposé dans l'espace defini dans les vannes guides du stator, le rotor comprenant un nombre des pales allongées du rotor (2) d'une section profile uniforme symétrique airfoil, placées symétriquement et éspacées également sur la péripherie du rotor, leur longueur paralléle à l'axe du rotor, chaque pale du rotor ayant des bouts premier et deuxième opposés en longueur, un bord antérieur courbe et un bord arrière angulaire mordant, des surfaces extérieures et intérieures arquées, où rélativement au rotor cylindrique les bords sont à disposition tangentielle et les bouts sont à disposition axiale, les bouts opposés premier et deuxième de chaque pale du rotor étant portés par respectifs des moyens de support du rotor opposés premier et deuxième, les moyens de support du rotor placés intermédiairement des moyens de support du stator et étant centralement et rotativement montés sur les côtés intérieurs des respectifs moyens de support du stator;
la machine à turbine est caractérisée:
à ce que les vannes guides ont une section profile uniforme symétrique airfoil avec un bord intérieur mordant (a-Fig.7), leur nombre variant entre 7 et 12, chaque vanne guide ayant une longueur de corde entre 1/4 et 1/7 de la diamètre totale de la machine, et une longueur de ligne croisée prise perpendiculairement à la ligne de corde au point de la plus grande distance entre les surfaces arquées antérieure et arrière, variant entre 1/4 et 1/7 de la longueur de corde;
à ce que chaque vanne guide est munie des moyens pour contrôler l'angle de déclinaison pour conditions opérationnelles variant ± 10 degrés à chaque direction de leur disposition radiale originale;
à ce que le rotor comprends un nombre des pales du rotor variant entre 2 et 8, chaque pale du rotor ayant une longueur de ligne de corde pas plus de 1/5 de la diamètre totale de la machine, et une longueur de ligne croisée prise perpendiculairement à la ligne de corde au point de la plus grande distance entre les surfaces intérieures et extérieures arquées variant entre 1/4 et 1/7 de la ligne de corde;
à ce que chaque pale du rotor est munie des moyens pour contrôler son angle de déclinaison pour conditions opérationnelles variant ± 10 degrés à chaque direction de leur disposition tangentielle originale;
à ce que les pales du rotor definissent un espace cylindrique intérieur vide (3) libre de tout obstacle et ayant une diamètre pas moins de la moitié de la diamètre totale de la machine.

9. Une machine à turbine, suivant la révendication 8, où toutes sections profiles des vannes guides et des pales du rotor étant divisées par leur cordes respectives à deux côtés et par leur lignes croisées respectives à deux portions, la portion principale comprenant le bord courbe, et la portion suivante comprenant le bord mordant, sont caractérisées à ce que chaque vanne guide et pale du rotor inclut du moins une paire des conduites de fluide, la première conduite de fluide (20) courante par une admission sur la surface de l'un côté de la portion principale, ensuite passante par les vannes guides / pales du rotor à une sortie sur la surface de l'autre côté de la portion suivante; la deuxième conduite de fluide, courante par une admission sur la surface de l'autre côté de la portion principale, ensuite passante par les vannes guides / pales du rotor à la surface de l'un côté de la portion suivante; les deux conduites s'entrecoupent à un commun point de jonction centralement posé (21); les deux conduites prolongent la longueur totale des vannes guides / pales du rotor, interrompue seulement par les endurcissants renforcés membres des vannes guides / pales du rotor.

10. La machine à turbine, suivant les révendications 8 et 9, caractérisée à ce que une pluralité des conduites entrecroisées de fluide, aux paires occupent la longueur totale des vannes guides et pales du rotor aux niveaux différents multiples successifs isolés l'un de l'autre.

11. La machine à turbine, suivant quelconque révendication précedente, où les moyens de support du rotor comprennent une paire première des disques du rotor circulaires opposés (6, 7), substantiellement égal en diamètre avec le rotor, les disques du rotor supportant respectivement sur leur péripherie les bouts opposés des pales du rotor (2), chaque disque du rotor ayant une barre émoussée (8, 10) prolongée vers l'extérieur de son centre, une deuxième paire des plaques couvrantes du stator, circulaires opposées (18, 19) placées parallèlement et à l'extérieur des disques du rotor (6, 7), d'une diamètre égale ou plus grande de la diamètre totale de la machine, les plaques couvrantes supportant sur leur péripherie les bouts opposés respectifs des vannes guides (1) et ayant des moyens supportants (9, 11) à leur centre pour monter rotativement les barres émoussées respectifs du rotor afin que le rotor est rotativement monté à l'intérieur de l'espace central cylindrique creux du stator, les moyens de support caractérisés à ce que chaque plaque couvrante a une section antérieure généralement plate ayant sur la surface intérieure un renfoncement plat circulaire centralement placé, de profondeur et de diamètre suffisantes pour accommoder afflux et libre pour la rotation des disques respectifs du rotor afin que les faces intérieures opposées des moyens de support forment des surfaces généralement continues plates sauf le petit vide entre les plaques couvrantes et les disques du rotor.

12. Une machine à turbine, suivant quelconque des révendications 1 à 10, où les moyens de support comprennent une paire première des disques du rotor circulaires opposés (23, 23') de diamètre substantiellement égale au rotor, les disques du rotor (23, 23') respectivement supportant sur leur péripherie les bouts opposés des pales du rotor (2), chaque disque du rotor ayant une barre émoussée (8, 10) prolongée vers l'extérieur de son centre et une surface intérieure courbe au côté intérieur opposé, une paire deuxième des plaques couvrantes du stator, circulaires opposés (24, 24') placés substantiellement parallèlement à l'extérieur des disques du rotor (23, 23') et ayant une diamètre égale ou plus grande de la diamètre totale de la machine, les plaques couvrantes supportant sur leur péripherie les bouts opposés respectifs des vannes guides (1) et ayant des moyens supportants à leur centre pour monter rotativement les barres émoussées respectifs du rotor (8, 10) selon lequels le rotor est rotativement monté dans l'espace central cylindrique creux du stator, les moyens de support caractérisés à ce que les plaques couvrantes du stator (24, 24') ont des surfaces extérieures plates et des surfaces intérieures courbes, convergées vers le centre de la machine, les surfaces intérieures courbes du stator ont un renfoncement conique centralement disposé entre les vannes guides, de diamètre et de profondeur suffisantes pour accommoder afflux et rotativement les disques opposés du rotor (23, 23') de façon que chaque des faces intérieures opposées des moyens de support constitue une surface continue de sphérique section sauf le petit vide entre les plaques couvrantes et les disques du rotor, ainsi les faces intérieures des moyens de support assistent un passage de flux de fluide au travers de la machine avec des qualifications du effet ventouri supplémentaires exercées sur le plan longitudinal.

13. Une machine à turbine, suivant quelconque révendication précedente, caractérisée à ce que les vannes guides (1) ont une forme conoïde, parabolique, descendante divergante générale, afin que les bords extérieurs des vannes guides (1) s'évasent vers l'extérieur, des bouts supérieurs vers les bouts inférieurs de cela, où la proportion entre la hauteur totale des vannes guides et la diamètre totale de la base de la machine ne surpasse pas le 1.

14. Une machine à turbine, suivant quelconque révendication précedente, caractérisée à ce que elle comprend en plus une pluralité des auxiliaires vannes guides de fluide (12) circonférencialement disposées autour le rotor, également éspacées et symètriquement interposées entre les vannes guides, les auxiliaires vannes guides de fluide ayant une longueur de corde pas plus de la moitié de la longueur de corde des vannes guides (1).

15. La machine à turbine, suivant la révendication 14, caractérisée à ce que les auxiliaires vannes guides de fluide sont choisies par le groupe qui est composé des vannes guides qui ont:
- une section profile arquée;
- une section profile croissant;
- une section profile airfoil de type aile;
- une section profile uniforme symétrique airfoil.

16. Une machine à turbine, suivant la révendication 1, caractérisée à ce que chaque pale du rotor (2) a une surface arrière partiellement plate auprès des bords et partiellement concave à la partie intermédiaire.

17. Une machine à turbine, suivant les révendications 1, 2, 3 ou 16, caractérisée à ce que chaque vanne guide (1, Fig. 6c) a une section profile croissant modifiée airfoil ayant une surface antérieure partiellement plate auprès des bords et partiellement concave à la partie intermédiaire, une surface arrière convexe, la longueur de la ligne croisée au plus distant point entre les surfaces antérieure et arrière, variant entre 1/4 et 1/7 de la longueur de la ligne de corde de la vanne guide, chaque vanne ayant des intérieurs et extérieurs bords mordants, une longueur de corde entre les bords pas plus de 1/5 de la diamètre totale de la machine, la ligne de corde de chaque vanne guide étant radialement disposée et également éspacée à relation environnante au rotor, avec angle contrôlable de déclinaison pour conditions opérationnelles jusqu' à ± 10 degrés à chaque direction de leur disposition radiale originale.
